# EUROPEAN PATENT SPECIFICATION

(11) **EP 2 608 334 B1**
(45) Date of publication and mention of the grant of the patent: **04.05.2016**
(21) Application number: 12198553.5
(22) Date of filing: 20.12.2012
(51) Int. Cl.: E04H 17/02, H02G 3/12, H02G 3/10, E04H 17/06

(54) **Fixing assembly, use thereof and method for mounting a fixing assembly**
Befestigungsanordnung, Verwendung dafür und Verfahren zur Montage einer Befestigungsanordnung
Ensemble de fixation, son utilisation et procédé de montage d'un ensemble de fixation

(30) Priority: 23.12.2011 BE 201100758
(43) Date of publication of application: 26.06.2013
(73) Proprietor: Niko NV, 9100 Sint-Niklaas (BE)
(72) Inventor: Cooreman, Tom, 9310 Meldert (BE)
(74) Representative: D'Halleweyn, Nele Veerle Trees Gertrudis

(56) References cited:
- WO-A1-95/05514
- NL-C2- 1 002 522

## Description

The present invention relates to a fixing assembly, particularly for the purpose of fixing an object such as an electrical apparatus to a closure such as a wire fence. The invention further relates to a clamping element for use in such an assembly, the use of such an assembly and method for fixing a fixing assembly on at least two wires of a closure.

Existing fixing assemblies generally make use of snap systems and have the drawback that they are intended and adapted for use with a fence of determined mesh sizes and cannot be used for differing types of closure.

WO 95/05514 discloses a system for attaching a sign to a chain link fence of the type having post-supported interwoven wires. The system comprises a sign, to the rear surface of which one or more attachment devices are secured. The attachment devices each comprise a pair of sections each having a face with circumscribing sides and interlocking means to secure the sections together along edges of their sides. The sections, when secured together over a cross-over center produce a hollow device having opposed faces and sides extending therebetween.

The present invention has for its object to provide a robust and simple fixing assembly which can be used for several types of closure.

An embodiment of a fixing assembly according to the invention has the features of claim 1. The fixing assembly comprises for this purpose a first clamping element, a second clamping element and a connecting means for connecting the first and second clamping elements. The first and second clamping elements are adapted to be fixed on at least two wires, and in particular on wires of different types. The fixing assembly can be realized in simple manner by making use of specially adapted clamping elements, which can be formed such that the assembly is usable for closures with different distances between the wires.

The first clamping element is provided on a first side with at least one first groove and at least one second groove. The second clamping element is also provided on a first side with at least one first groove and at least one second groove. Each first groove of the first clamping element is adapted for co-action with a first groove of the second clamping element for the purpose of receiving a first wire therebetween, and each second groove of the first clamping element is adapted for co-action with a second groove of the second clamping element for the purpose of receiving a second wire therebetween. The first and the second wire can in this way be carried between the first sides of the first and the second clamping element, and the first and the second clamping element can be fixed on the first and the second wire by the connecting means.

The fixing assembly can be realized in simple manner by making use of first and second grooves, and the grooves can be dimensioned and arranged such that the assembly is usable for closures with different distances between the wires.

According to an advantageous embodiment, the first clamping element is provided on the first side with at least one recess, and the second clamping element is provided on the first side with at least one protrusion with a shape complementary to that of the recess. The first clamping element can in this way be mounted non-rotatably against the second clamping element, so avoiding inaccurate positioning of the first or second wires in the grooves.

The at least one first and second groove of the first and second clamping elements are preferably located on either side of the connecting means. In this way a uniform clamping can be applied to the first and second wires when the tensionable connecting means is tensioned, and this avoids bending of the clamping elements. This is particularly important when it is desirable to obtain a watertight connection between a housing of an apparatus and the first or second clamping plate. According to a particularly advantageous embodiment, the connecting means extends between substantially the centre of the first clamping element and substantially the centre of second clamping element. If a plurality of connecting means are used, these are then preferably also provided at a distance from each other along a centre line of the first clamping element running parallel to the first and second grooves. In addition, the at least one first groove of respectively the first and second clamping element preferably runs substantially parallel to the at least one second groove of respectively the first and second clamping element.

According to the preferred embodiment, the connecting means is a screw. The screw can already mutually connect the clamping elements prior to placing of the assembly, and can then be tightened once the clamping elements have been placed on either side of the first and second wires. The combination of a screw and the fact that it is arranged substantially in the centre provides for an easier assembly, wherein the first and second wires can be placed on either side of the screw between the first and second clamping elements. The screw can for instance be a self-tapping screw.

The at least one first groove of the first and second clamping element comprises in each case at least two adjacent first grooves and/or the at least one second groove of the first and second clamping element comprises in each case at least two adjacent second grooves. The assembly is in this way suitable for closures of different mesh sizes.

Although the above embodiments refer to fixing on a first and second wire, the skilled person will appreciate that the assembly can be readily extended to form an assembly which is clamped fixedly to more than two wires at a time.

According to the preferred embodiment, the first and the second clamping elements are substantially plate-like. Plate-like clamping elements are easy to manufacture and are highly suitable for the invention.
According to a further developed embodiment, the at least one first and second groove of the first clamping element extend in a first direction, and at least one further first groove and at least one further second groove are further provided in a second direction on the first side of the first clamping element, wherein the first direction is at an angle to the second direction. The second clamping element can in this way be arranged at an angle relative to the first clamping element, wherein a first/second wire extends between a further first/second groove of the first clamping element and a first/second groove of the second clamping element.

According to a possible embodiment, the first clamping element in substantially square with a side of a determined dimension, and the second clamping element has a width substantially equal to the determined dimension and a height smaller than the determined dimension. This ensures that the second clamping element fits substantially within the periphery of the first clamping element when a first and second wire are clamped respectively between a further first and second groove of the first clamping element and a first and second groove of the second clamping element. The determined dimension of the first clamping element will typically be slightly larger than a maximum distance between a first and a second wire of a closure.

According to a particularly advantageous embodiment, the first clamping element is provided on a second side with at least one third groove and at least one fourth groove, and the second clamping element is also provided on a second side with at least one third groove and at least one fourth groove. Each third groove of the first clamping element is then adapted for co-action with a third groove of the second clamping element for the purpose of receiving a third wire therebetween, and each fourth groove of the first clamping element is adapted for co-action with a fourth groove of the second clamping element for the purpose of receiving a fourth wire therebetween. The third and the fourth wire can in this way be carried between the second sides of the first and the second clamping element, and the first and second clamping element can be fixed on the third and fourth wires by tensioning the connecting means.

In similar manner as for the first and second grooves, the at least one third groove of the first and second clamping element preferably comprises in each case at least two adjacent third grooves, and/or the at least one fourth groove of the first and second clamping element comprises in each case at least two adjacent fourth grooves. The at least one third groove of the first and second clamping element preferably also runs substantially parallel to the at least one fourth groove of respectively the first and second clamping element. The first clamping element can also be provided on the second side with at least one recess and the second clamping element can be provided with at least one protrusion with a shape complementary to that of the recess, this such that the first clamping element is mounted non-rotatably against the second clamping element when the third and fourth wires are clamped between the second sides of the first and second clamping elements.

According to a further developed variant, the dimensions of each first and second groove are substantially identical and are for instance adapted for a wire with a diameter of 3 to 7 mm. The dimensions of each third and fourth groove can also be substantially identical, and can for instance be adapted to receive a wire with a diameter of 1 to 4.5 mm, preferably 2 to 4.5 mm.

According to a possible embodiment, the fixing assembly further comprises a mounting screw and the first clamping element is adapted for mounting of a housing of an electrical apparatus thereagainst using the mounting screw. The first clamping element can preferably then be provided with a recess and the second clamping element with a protrusion, or vice versa, wherein the recess and complementary protrusion are adapted to receive an outer end of the mounting screw therein. The creepage distance between the mounting screw and the edge of the associated clamping element is in this way increased.

In similar manner as for the first and second grooves, the at least one third and fourth groove of the first clamping element can extend in a first direction, and at least one further third groove and at least one further fourth groove can further be provided in a second direction on the first side of the first clamping element, wherein the first direction is at an angle to the second direction.

According to a further developed embodiment, the assembly comprises an additional second clamping element and an additional connecting means. The first clamping element is further provided on its first side with at least one additional first groove and at least one additional second groove in line with respectively the first and second groove. Just as the second clamping element, the second additional clamping element is provided on a first side with at least one first groove and at least one second groove. Each first additional groove of the first clamping element is adapted for co-action with a first groove of the additional second clamping element for the purpose of receiving the first wire therebetween, and each additional second groove of the first clamping element is adapted for co-action with a second groove of the additional second clamping element for the purpose of receiving the second wire therebetween.

According to a possible embodiment, the first and the second clamping element are manufactured from plastic, preferably a reinforced plastic material such as a fibre-reinforced plastic material. Examples of suitable materials are: polyamide, glass fibre-reinforced polyamide, polypropylene, ABS and so on.

The invention further relates to the use of a fixing assembly as according to any of the above described embodiments for mounting an object against a panel closure with wires, wherein the object is mounted against a side of the first or second clamping element. The object is for instance one of the following: an electrical apparatus such as a socket outlet, a lighting element or a switch, a bracket for instance for a tube for an electrical cable, a holder.

The invention also relates to a first clamping element adapted for use in a fixing assembly as described above, and a second clamping element adapted for use in a fixing assembly as described above.

Finally, the invention relates to a method for mounting a fixing assembly with a first and second clamping element against a panel closure with a first and a second wire. The first clamping element is placed with a first side against a first side of the second clamping element. The first clamping element is connected to the second clamping element by means of a connecting means, typically a screw. The first and the second wire are carried between the first and the second clamping element, and the connecting means is tensioned for the purpose of clamping the first and second wire between the first and the second clamping element. According to an advantageous embodiment of the method, the fixing assembly is embodied as according to any of the above described embodiments.

The invention likewise relates to a method for mounting a fixing assembly as according to any of the above described embodiments on a panel closure with a first and a second wire running substantially at an angle of 45 degrees relative to the ground, comprising the following steps:
- the first clamping element is placed with a first side against a first side of the second clamping element;
- the first clamping element is connected to the second clamping element by means of a connecting means;
- the third and the fourth wire are carried between the first and the second clamping element, wherein the first wire extends between a further first groove of the first clamping element and a first groove of the second clamping element and the second wire extends between a further second groove of the first clamping element and a second groove of the second clamping element;
- the connecting means is tensioned for the purpose of clamping the third and fourth wire between the first and the second clamping element.

The present invention will be further elucidated on the basis of a number of by no means limitative exemplary embodiments of a fixing assembly according to the invention, with reference to the accompanying drawings, in which:
Figure 1 illustrates a perspective view of a first embodiment of a fixing assembly according to the invention;
Figures 2A, 2B and 2C show a cross-section along line II-II for respectively a first, a second and a third wire distance in the mounted situation;
Figure 3 shows a perspective view similar to figure 1 in which the fixing assembly is mounted on a second type of closure;
Figure 4 shows a cross-section along line IV-IV in figure 3 in the mounted situation;
Figure 5 shows a perspective view similar to figure 1 in which the fixing assembly is mounted on a third type of closure;
Figure 6 shows a cross-section along line VI-VI in figure 5 in the mounted situation;
Figures 7A and 7B illustrate a second embodiment of a fixing assembly according to the invention for respectively a first and a second type of closure;
Figure 8 illustrates a detail view of a cross-section along line VIII-VIII in figure 1 in the mounted situation; and
Figure 9 illustrates a perspective view of a third embodiment of a fixing assembly according to the invention.

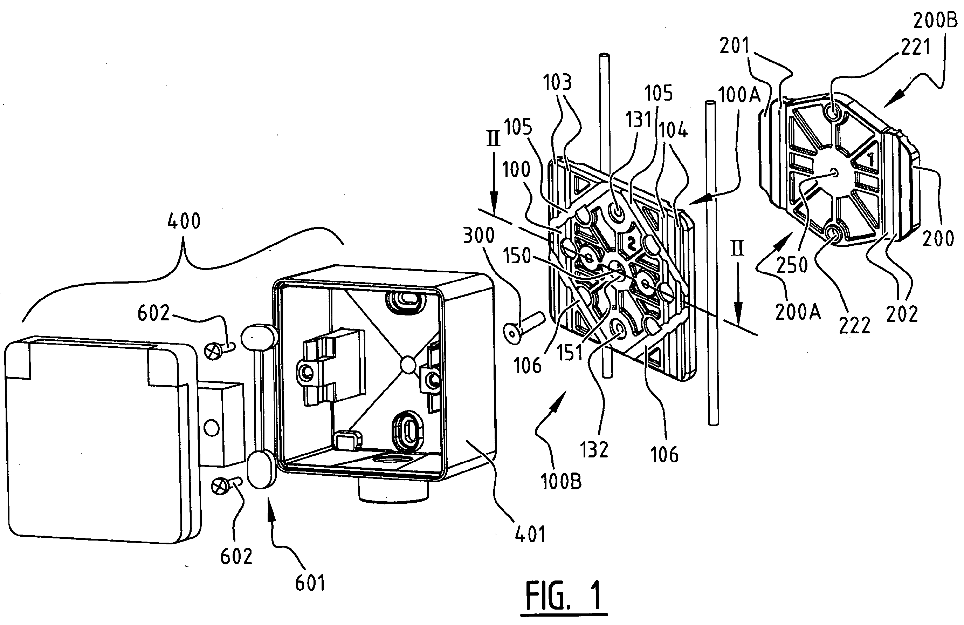

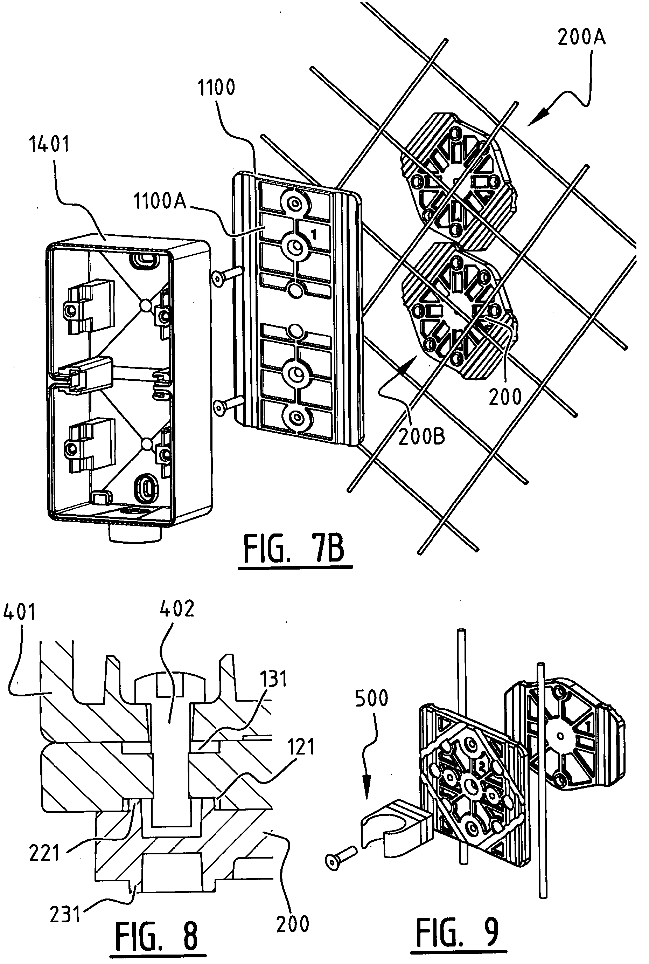

A first embodiment of a fixing assembly according to the invention will be elucidated with reference to figures 1-6. The fixing assembly comprises a first clamping plate 100, a second clamping plate 200 and a connecting screw 300. The first and second clamping plates 100, 200 are clamped firmly onto a closure with wires 111, 112. The first and/or second clamping plate 100, 200 functions as fixing plate for all manner of objects. In the illustrated example a socket outlet assembly 400 is mounted against first clamping plate 100. The box of such a socket outlet assembly is mounted in the shown embodiment against first clamping plate 100 using two screws 602 over which sealing caps 601 are arranged. Another object can also be mounted instead of a socket outlet against the first and/or the second clamping plates 100, 200. Other examples of objects which can be mounted with a fixing assembly according to the invention are: one or more brackets 500, see figure 9, a lighting element (not illustrated), a switch (not illustrated) and so on. Bracket 500 of figure 9 is adapted to receive an electrical cable. An electrical cable intended for connection to for instance a socket outlet can in this way be guided in convenient manner along and fixed against the panel closure.

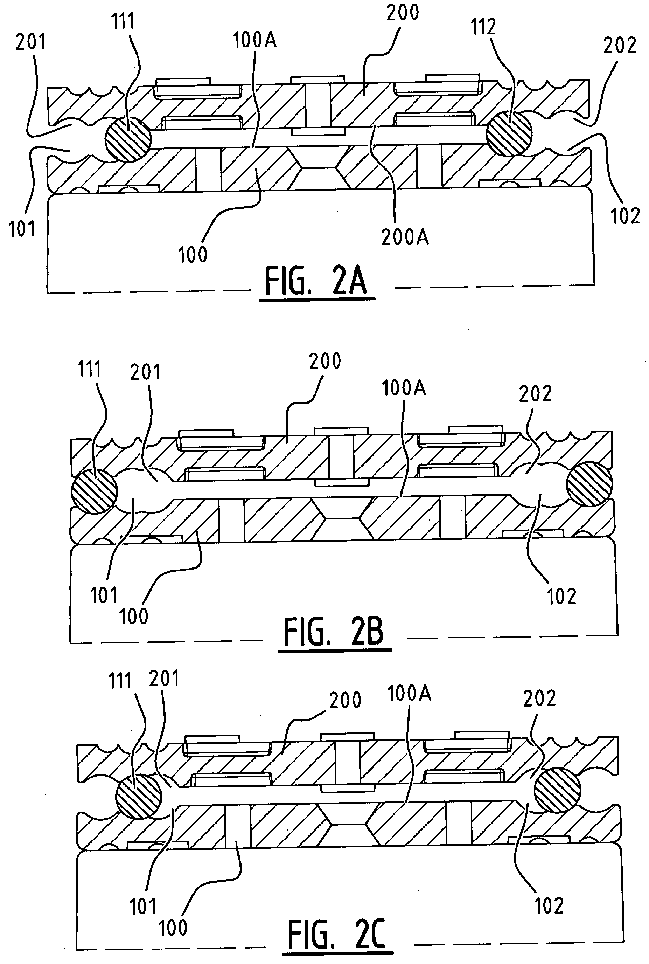

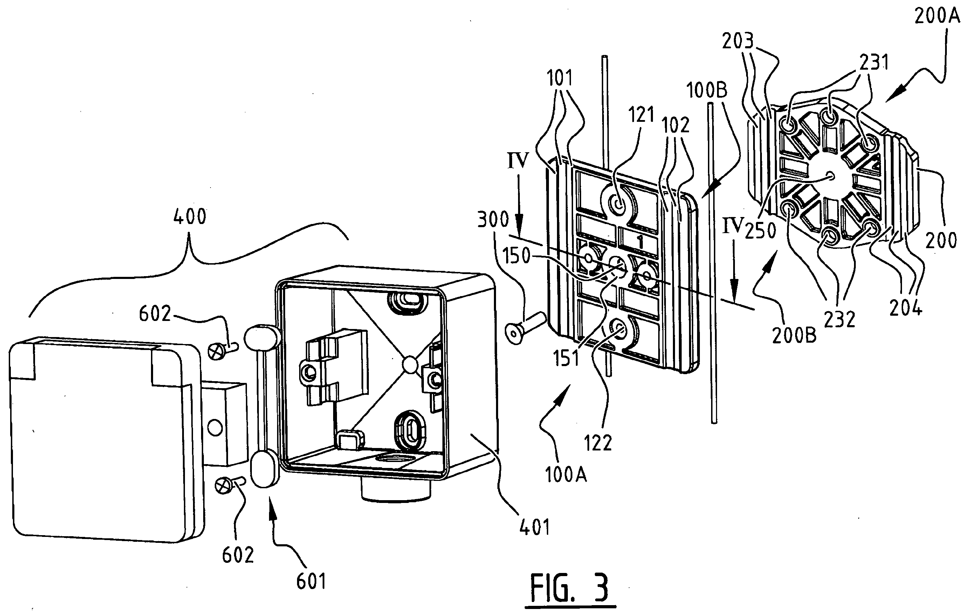

On a first side 100A, which is best shown in figures 2A and 2B and in figure 3, first clamping plate 100 is provided with three adjacent first grooves 101 and three adjacent second grooves 102. First grooves 101 are parallel to second grooves 102. The distance between first grooves 101 and second grooves 102 is determined by the mesh sizes for which the fixing assembly must be suitable. Second clamping plate 200 is provided on a first side 200A with three adjacent first grooves 201 and three adjacent second grooves 202, see figure 1 and figures 2A and B. A first groove 101 of first clamping plate 100 is adapted to co-act with a second groove 201 of second clamping plate 200 for the purpose of receiving a first wire 111 therebetween. A second groove 102 of first clamping plate 100 is adapted in similar manner to co-act with a second groove 202 of second clamping plate 200 for the purpose of receiving a second wire 112 therebetween.

In order to fix the fixing assembly on the first and second wires, the first clamping plate 100 will typically first be connected by means of screw 300 to second clamping plate 200, wherein the screw is tightened only a little such that the first and the second wires 111, 112 can be carried between the first and the second clamping plates. Once the first and second wires 111, 112 have been arranged in the respective first and second grooves 101, 201; 102, 202, screw 300 can be tightened in order to clamp the clamping plates 100, 200 firmly against the wires. Providing a plurality of first and second grooves 101, 201; 102, 202 enables the same clamping elements 100, 200 to be used for closures with differing mesh sizes. This is illustrated in figures 2A, 2B and 2C. Figure 2A illustrates - for a first type of wire - the smallest mesh size for which the fixing assembly is suitable, for instance 50 mm, figure 2B shows the largest mesh size, for instance 65 mm, and figure 2C shows an intermediate mesh size, for instance 55 mm. Note that, in order to accommodate several mesh sizes, it is also possible to provide only one first groove 101, 201 in each clamping plate 100, 200, while still providing a plurality of second grooves 102, 202. According to yet another variant, only one first groove and one second groove are provided in each case, but these grooves are given a greater width such that the fixing assembly is also usable for several mesh sizes. This latter variant does however have the drawback that the wires are typically fixed less firmly.

First clamping plate 100 is provided on its first side 100A with two recesses 121, 122. Second clamping plate 200 is provided on its first side 200A with two protrusions 221, 222 with a shape complementary to that of recesses 121, 122 such that they fit together, see also figure 8. These mutually co-acting recesses 121, 122 and protrusions 221, 222 enhance the non-rotatable mounting of first clamping plate 100 against second clamping plate 200. Such a recess/complementary protrusion can further be adapted for tightening of a screw therein, preferably a self-tapping screw, for instance for the purpose of mounting a housing 401 of an electrical apparatus against first clamping plate 100, see figure 8. The use of such a protrusion/recess increases the creepage distance D, i.e. the distance between a mounting screw and a touchable surface.

The first clamping plate is provided substantially in the middle with an opening 150 for screw 300. This opening 150 preferably has close to first side 100A and close to second side 100B a substantially conical surface 151 adapted to co-act with the head of screw 300. Second clamping plate 200 is provided substantially in the middle with a passage 250 into which screw 300 can be tightened. By arranging openings 150, 250 substantially in the middle of first clamping plate 100 and second clamping plate 200, one screw 300 can typically suffice as connecting means, wherein clamping elements 100, 200 are still clamped firmly against the wires without deforming them. This is particularly important when a housing 401 has to be mounted substantially watertightly against the surface of first clamping plate 100 and this clamping plate 100 may not therefore be deformed as a result of tensioning of the connecting means.

Alternatively, one or more openings can be provided through housing 401 which co-act with one or more openings in first and second clamping plates 100 and 200 such that connecting means 300 will ensure that the housing is mounted directly on first and second clamping plates 100 and 200.

Preferably guaranteed in this case is that no conduction can be made with possible electric wires in the housing. Use can be made for this purpose of a non-conductive screw or, in the case of a conductive screw, a protective cap can be provided which can be placed on the one or more openings on the inner side of housing 401, see also figure 1.

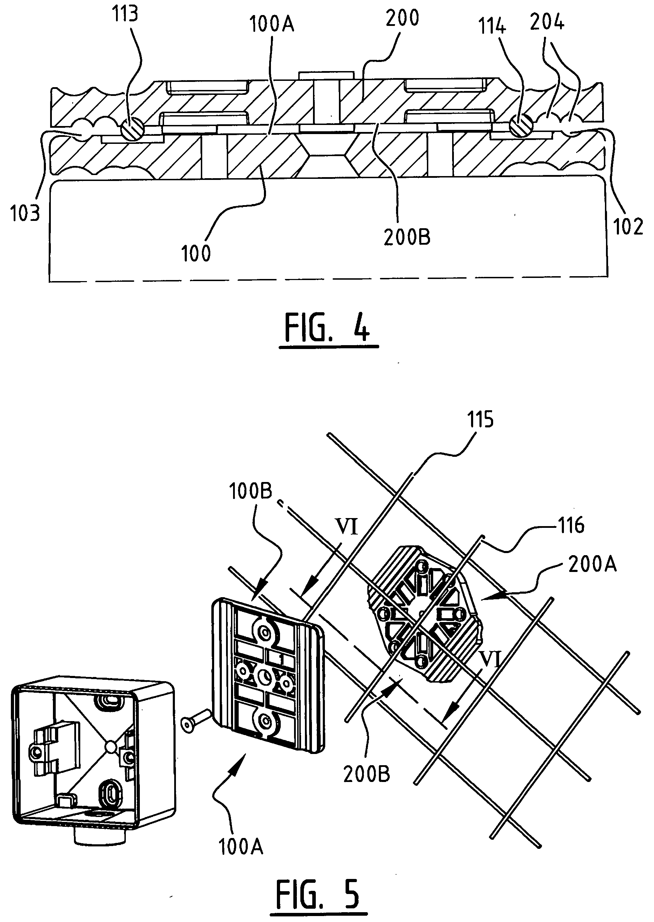

In the embodiment illustrated in figure 3 first clamping plate 100 and second clamping plate 200 are arranged, with their second sides 100B, 200B facing toward each other, over a third and fourth wire 113, 114 of a closure of a second type with thinner wires. Two first grooves 103 and two second grooves 104 are provided on the second side 100B of first clamping plate 100. Three third grooves 203 and three fourth grooves 204 are provided in similar manner on the second side 200B of second clamping plate 200. The third wire 113 is arranged between third grooves 103, 203 and fourth wire 114 between fourth grooves 104, 204. Figure 4 shows that the distance between the third and fourth grooves 103, 203; 104, 204 is adapted to co-act with closures with a differing mesh opening, for instance 50 mm and 63 mm, wherein figure 4 illustrates the smaller mesh size.

The distance between the third and fourth grooves is adapted for the second type of closure. The dimensions of the third and fourth grooves 103, 203; 104, 204 are further adapted to a second type of wire. In the illustrated embodiment the first and second grooves 101, 201; 102, 202 are for instance adapted to a diameter of 3 mm to 7 mm, more preferably to a diameter of 4 mm to 6 mm. The third and fourth grooves 103, 203; 104, 204 can for instance be adapted to a wire with a diameter of 2 mm to 3 mm, preferably 2.0 mm to 2.5 mm. The number of first and second grooves 101, 201; 102, 202 can for instance further be chosen to enable co-action with a closure with mesh openings of 50 mm, 55 mm and 65 mm. The distance between third and fourth grooves 103, 203; 104, 204 can then for instance be adapted for co-action with closures with a mesh opening of 50 mm and 63 mm.

First clamping plate 100 is provided on its second side 100B with eight recesses 131, 132 in regular distribution in a circle around passage 150. Second clamping plate 200 is provided on its second side 200B with six protrusions 231, 232 with a shape complementary to that of recesses 131, 132 such that they fit together. Note that the second side 200B of second clamping plate 200 can be mounted in different positions against first side 100A of first clamping plate 100, see the description of figure 5 below. These mutually co-acting recesses 131, 132 and protrusions 231, 232 enhance the non-rotatable mounting of first clamping plate 100 against second clamping element 200. Such a recess can further be adapted for the purpose of tightening a screw therein, for instance for fixing a housing 401 of an electrical apparatus. Recesses 121, 122 are provided for this purpose with through-holes which debouch in recesses in protrusions 231, 232, see also figure 8. The use of such a protrusion/recess increases the creepage distance D, i.e. the distance between a mounting screw and a touchable surface.

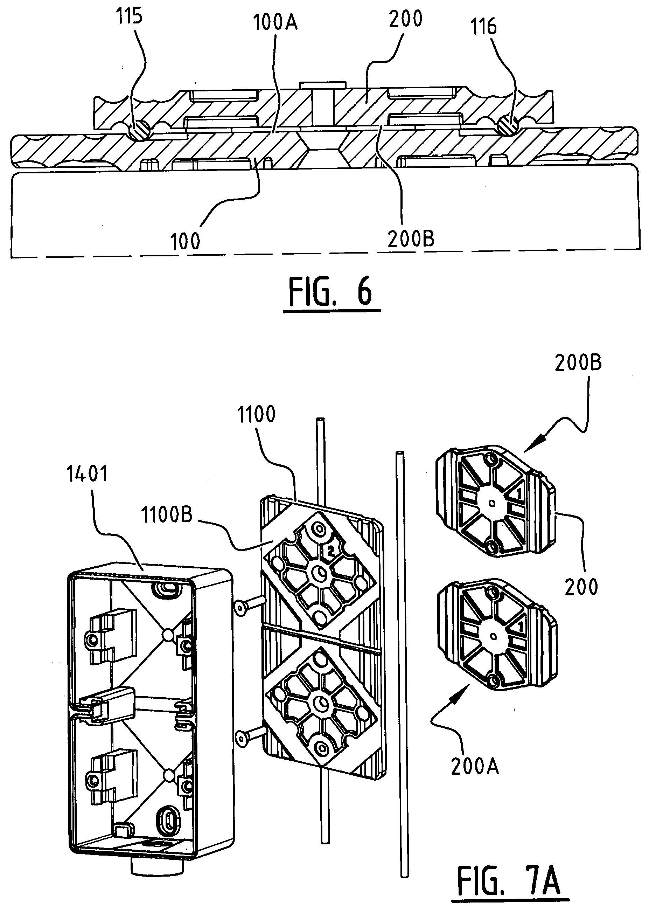

Figure 5 illustrates how the fixing assembly according to the invention can be mounted on a third type of closure with intersecting oblique wires. In order to make this possible an additional third groove 105 and an additional fourth groove 106 are provided on second side 100B of the first clamping plate. The additional third and fourth grooves 105, 106 are at an angle of substantially 45 degrees to the third and fourth grooves 103, 104, and can for instance be dimensioned to be able to receive wires of 3 to 5 mm. In the illustrated variant two additional first grooves 105 directed transversely of each other and two additional first grooves 106 directed transversely of each other are provided such that the first clamping plate is symmetrical and the second clamping plate 200 can be mounted rotated through 45 degrees in two directions against the first clamping plate. The fixing assembly can in this way also be used without problem for closures with a third and a fourth oblique wire 115, 116, wherein the third wire 115 can be clamped between an additional third groove 105 of first clamping plate 100 and a third groove 203 of the second clamping plate and the fourth wire 116 can be clamped between an additional fourth groove 106 and a fourth groove 204, see figure 6. The skilled person will appreciate is that a plurality of additional third and fourth grooves can also be provided here to enable co-action with different types of mesh size. Tolerances or large variations can more particularly be accommodated by another groove, for instance in clamping plate 100, to the left or right of the shown wires 115, 116.

Figures 7 and 8 illustrate a further developed embodiment of a fixing assembly according to the invention which is particularly suitable for mounting larger apparatus such as a surface-mounted double outlet 1401 intended for instance for two socket outlets. The fixing assembly comprises a first clamping plate 1100 in dual form, two second clamping plates 200 and two screws 300. First clamping plate 1100 is formed by two mutually connecting and integrally formed first clamping plates 100. Mounting and use are further similar to the above description with reference to figures 1-6, with the difference that everything takes dual form.

The skilled person will appreciate that a second integral clamping plate in dual form (not shown) can likewise be used instead of two second clamping plates 200. This however allows less flexibility in the choice of the wire.

Finally, figure 9 shows a variant of the embodiment of figure 1, wherein a bracket 500 is mounted against fixing plate 100 for the purpose of fixedly holding a tube for an electrical cable.

The skilled person will appreciate that the invention is not limited to the above discussed exemplary embodiments and that many modifications and variants can be envisaged within the scope of the invention, which is defined solely by the following claims.

## Claims

1. Fixing assembly, comprising a first clamping element, a second clamping element and a connecting means for connecting the first and second clamping elements (100, 200), wherein the first and second clamping elements are adapted to be fixed on at least two wires (111, 112), and in particular to be fixable on different wire types; wherein the first clamping element (100) is provided on a first side (100A) with at least one first groove (101) and at least one second groove (102); and the second clamping element (200) is provided on a first side (200A) with at least one first groove (201) and at least one second groove (202),
wherein each first groove (101) of the first clamping element (100) is adapted for co-action with a first groove (201) of the second clamping element (200) for the purpose of receiving a first wire (111) therebetween, and each second groove (102) of the first clamping element (100) is adapted for co-action with a second groove (202) of the second clamping element (200) for the purpose of receiving a second wire (112) therebetween;
this such that the first and the second wire (111,112) can be carried between the first sides (100A, 200A) of the first and the second clamping element (100, 200), and the first and the second clamping element (100, 200) can be fixed on the first and second wire (111, 112) by the connecting means (300); **characterized in that** the at least one first groove (102) and/or the at least one second groove (202) of the first and second clamping element (100, 200) comprises in each case at least two adjacent first and/or second grooves (102, 202).

2. Fixing assembly as claimed in claim 1, **characterized in that** the first clamping element (100) is provided on the first side (100A) with at least one recess (121), and that the second clamping element (200) is provided on the first side (200A) with at least one protrusion (221) with a shape complementary to that of the recess (121), this such that the first clamping element (100) is mounted non-rotatably against the second clamping element (200) when the first and second wires (111, 112) are clamped between the first sides (100A, 200A) of the first and second clamping elements (100, 200).

3. Fixing assembly as claimed in any of the claims 1-2, **characterized in that** the at least one first and second groove (102, 202) of the first and second clamping elements (100, 200) are located on either side of the connecting means (300).

4. Fixing assembly as claimed in any of the claims 1-3, **characterized in that** the connecting means (300) extends between substantially the centre of the first clamping element (100) and substantially the centre of the second clamping element (200).

5. Fixing assembly as claimed in any of the claims 1-4, **characterized in that** the at least one first groove (101, 201) of respectively the first and second clamping element (100, 200) is substantially parallel to the at least one second groove (102, 202) of respectively the first and second clamping element (100, 200); and/or
that the at least one first and second groove (101, 102) of the first clamping element (100) extend in a first direction, and that at least one further first groove and at least one further second groove are further provided in a second direction on the first side (100A) of the first clamping element (100), wherein the first direction is at an angle to the second direction.

6. Fixing assembly as claimed in any of the foregoing claims, **characterized in that** the connecting means (300) is a screw.

7. Fixing assembly as claimed in any of the foregoing claims, **characterized in that** the first and the second clamping elements (100, 200) are substantially plate-like.

8. Fixing assembly as claimed in any of the foregoing claims, **characterized in that** the first clamping element (100) is provided on a second side (100B) with at least one third groove (105) and at least one fourth groove (106); and the second clamping element (200) is provided on a second side (200B) with at least one third groove (203) and at least one fourth groove (204), wherein each third groove (105) of the first clamping element (100) is adapted for co-action with a third groove (203) of the second clamping element (200) for the purpose of receiving a third wire (115) therebetween, and each fourth groove (106) of the first clamping element is adapted for co-action with a fourth groove (204) of the second clamping element (200) for the purpose of receiving a fourth wire (116) therebetween;
this such that the third and the fourth wire (115, 116) can be carried between the second sides (100B, 200B) of the first and the second clamping element (100, 200), and the first and second clamping element (100, 200) can be fixed on the third and fourth wires (115, 116) by the connecting means (300).

9. Fixing assembly as claimed in claim 9, **characterized in that** the at least one third groove (105, 203) of the first and second clamping element (100, 200) comprises in each case at least two adjacent third grooves; and/or
that the at least one fourth groove (106, 204) of the first and second clamping element (100, 200) comprises in each case at least two adjacent fourth grooves; and/or
that the at least one third groove (105, 203) of the first and second clamping element (100, 200) is substantially parallel to the at least one fourth groove (106, 204) of respectively the first and second clamping element (100, 200); and/or
that the dimensions of each first and second groove (101, 102) are substantially identical and are preferably adapted for a wire with a diameter of 3 to 7 mm, that the dimensions of each third and fourth groove (105, 106; 203, 204)) are substantially identical and are preferably adapted for a wire of 1 to 3 mm, more preferably 2 to 3 mm, and that the dimensions of each first and second groove (101, 201; 201, 202) differ from the dimensions of each third and fourth (105, 106; 203, 204) groove; and/or
that the first clamping element (100) is provided on the second side (100B) with at least one recess (121) and that the second clamping element (200) is provided on the second side (200B) with at least one protrusion (221) with a shape complementary to that of the recess (121), this such that the first clamping element (100) is mounted non-rotatably against the second clamping element (200) when the third and fourth wires (115, 116) are clamped between the second sides (100B, 200B) of the first and second clamping elements (100, 200); and/or
that the at least one third and fourth groove (105, 106) of the first clamping element (100) extend in a first direction, and that at least one further third groove and at least one further fourth groove are further provided in a second direction on the first side (100A) of the first clamping element (100), wherein the first direction is at an angle to the second direction.

10. Fixing assembly as claimed in any of the foregoing claims, **characterized in that** the fixing assembly further comprises a screw (300) and that the first clamping element (100) is adapted for mounting of a housing of an electrical apparatus thereagainst using the screw (300); that the first clamping element (100) is provided with a recess (121) and the second clamping element (200) with a protrusion (221), or vice versa; and that the recess (121) and complementary protrusion (221) are adapted to receive the screw (300) therein.

11. First clamping element (100) for use in a fixing assembly as claimed in any of the foregoing claims; **characterized in that** the at least one first groove (102) and/or the at least one second groove (202) of the first clamping element (100) comprises in each case at least two adjacent first and/or second grooves (102, 202).

12. Second clamping element (200) for use in an assembly as claimed in any of the claims 1-10; **characterized in that** the at least one first groove (102) and/or the at least one second groove (202) of the second clamping element (200) comprises in each case at least two adjacent first and/or second grooves (102, 202).

13. Method for mounting a fixing assembly according to any one of the claims 1-10, with a first and second clamping element (100, 200) against a panel closure with a first and a second wire (111, 112), comprising the following steps:
- the first clamping element (100) is placed with a first side (100A) against a first side (200A) of the second clamping element (200);
- the first clamping element (100) is connected to the second clamping element (200) by means of a connecting means (300);
- the first and the second wire (111, 112) are carried between the connected first and the second clamping element (100, 200);
- the connecting means (300) is tensioned for the purpose of clamping the first and second wire (111, 112) between the first and the second clamping element (100, 200).

## Patentansprüche

1. Befestigungsanordnung, umfassend ein erstes Klemmelement, ein zweites Klemmelement und ein Verbindungsmittel zur Verbindung des ersten und zweiten Klemmelements (100, 200), wobei das erste und zweite Klemmelement angepasst sind um an zumindest zwei Drähten (111, 112) befestigt zu werden und insbesondere an verschiedenen Drahttypen befestigbar zu sein; wobei das erste Klemmelement (100) an einer ersten Seite (100A) mit zumindest einer ersten Nut (101) und zumindest einer zweiten Nut (102) bereitgestellt wird; und das zweite Klemmelement (200) an einer ersten Seite (200A) mit zumindest einer ersten Nut (201) und zumindest einer zweiten Nut (202) bereitgestellt wird,
wobei jede erste Nut (101) des ersten Klemmelements (100) zur Zusammenwirkung mit einer ersten Nut (201) des zweiten Klemmelements (200) zum Zwecke der Aufnahme eines ersten Drahtes (111) dazwischen angepasst ist, und jede zweite Nut (102) des ersten Klemmelements (100) zur Zusammenwirkung mit einer zweiten Nut (202) des zweiten Klemmelements (200) zum Zwecke der Aufnahme eines zweiten Drahtes (112) dazwischen angepasst ist;
dies so, dass der erste und der zweite Draht (111, 112) zwischen den ersten Seiten (100A, 200A) des ersten und zweiten Klemmelements (100, 200) getragen werden können und das erste und zweite Klemmelement (100, 200) durch das Verbindungsmittel (300) an dem ersten und zweiten Draht (111, 112) befestigt werden können; **dadurch gekennzeichnet, dass** die zumindest eine erste Nut (102) und/oder die zumindest eine zweite Nut (202) des ersten und zweiten Klemmelements (100, 200) in jedem Fall zumindest zwei benachbarte erste und/oder zweite Nuten (102, 202) umfasst.

2. Befestigungsanordnung nach Anspruch 1, **dadurch gekennzeichnet, dass** das erste Klemmelement (100) an der ersten Seite (100A) mit zumindest einer Aussparung (121) bereitgestellt wird, und dass das zweite Klemmelement (200) an der ersten Seite (200A) mit zumindest einem Protrusion (221) mit einer Form, die zu derjenigen der Aussparung (121) komplementär ist, bereitgestellt wird, dies so, dass das erste Klemmelement (100) nicht drehbar an dem zweiten Klemmelement (200) angebracht ist, wenn der erste und zweite Draht (111, 112) zwischen die ersten Seiten (100A, 200A) des ersten und zweiten Klemmelements (100, 200) geklemmt sind.

3. Befestigungsanordnung nach einem der Ansprüche 1-2, **dadurch gekennzeichnet, dass** sich die zumindest eine erste und zweite Nut (102, 202) des ersten und zweiten Klemmelements (100, 200) auf beiden Seiten des Verbindungsmittels (300) befinden.

4. Befestigungsanordnung nach einem der Ansprüche 1-3, **dadurch gekennzeichnet, dass** sich das Verbindungsmittel (300) zwischen im Wesentlichen der Mitte des ersten Klemmelements (100) und im Wesentlichen der Mitte des zweiten Klemmelements (200) erstreckt.

5. Befestigungsanordnung nach einem der Ansprüche 1-4, **dadurch gekennzeichnet, dass** die zumindest eine erste Nut (101, 201) von jeweils dem ersten und zweiten Klemmelement (100, 200) im Wesentlichen parallel zu der zumindest einen zweiten Nut (102, 202) von jeweils dem ersten und zweiten Klemmelement (100, 200) ist; und/oder
dass sich die zumindest eine erste und zweite Nut (101, 102) des ersten Klemmelements (100) in eine erste Richtung erstrecken, und dass zumindest eine weitere erste Nut und zumindest eine weitere zweite Nut weiter in einer zweiten Richtung an der ersten Seite (100A) des ersten Klemmelements (100) bereitgestellt werden, wobei die erste Richtung an einem Winkel zu der zweiten Richtung ist.

6. Befestigungsanordnung nach einem der vorhergehenden Ansprüche, **dadurch gekennzeichnet, dass** das Verbindungsmittel (300) eine Schraube ist.

7. Befestigungsanordnung nach einem der vorhergehenden Ansprüche, **dadurch gekennzeichnet, dass** das erste und zweite Klemmelement (100, 200) im Wesentlichen plattenartig sind.

8. Befestigungsanordnung nach einem der vorhergehenden Ansprüche, **dadurch gekennzeichnet, dass** das erste Klemmelement (100) an einer zweiten Seite (100B) mit zumindest einer dritten Nut (105) und zumindest einer vierten Nut (106) bereitgestellt wird; und das zweite Klemmelement (200) an einer zweiten Seite (200B) mit zumindest einer dritten Nut (203) und zumindest einer vierten Nut (204) bereitgestellt wird, wobei jede dritte Nut (105) des ersten Klemmelements (100) zur Zusammenwirkung mit einer dritten Nut (203) des zweiten Klemmelements (200) zum Zwecke der Aufnahme eines dritten Drahtes (115) dazwischen angepasst ist, und jede vierte Nut (106) des ersten Klemmelements zur Zusammenwirkung mit einer vierten Nut (204) des zweiten Klemmelements (200) zum Zwecke der Aufnahme eines vierten Drahtes (116) dazwischen angepasst ist;
dies so, dass der dritte und der vierte Draht (115, 116) zwischen den zweiten Seiten (100B, 200B) des ersten und des zweiten Klemmelements (100, 200) getragen werden können, und das erste und zweite Klemmelement (100, 200) durch das Verbindungsmittel (300) an dem dritten und vierten Draht (115, 116) befestigt werden können.

9. Befestigungsanordnung nach Anspruch 9, **dadurch gekennzeichnet, dass** die zumindest eine dritte Nut (105, 203) des ersten und zweiten Klemmelements (100, 200) in jedem Fall zumindest zwei benachbarte dritte Nuten umfasst; und/oder
dass die zumindest eine vierte Nut (106, 204) des ersten und zweiten Klemmelements (100, 200) in jedem Fall zumindest zwei benachbarte vierte Nuten umfasst; und/oder
dass die zumindest eine dritte Nut (105, 203) des ersten und zweiten Klemmelements (100, 200) im Wesentlichen parallel zu der zumindest einen vierten Nut (106, 204) von jeweils dem ersten und zweiten Klemmelement (100, 200) ist; und/oder
dass die Maße jeder ersten und zweiten Nut (101, 102) im Wesentlichen identisch sind und bevorzugt für einen Draht mit einem Durchmesser von 3 bis 7 mm angepasst sind, dass die Maße jeder dritten und vierten Nut (105, 106; 203, 204) im Wesentlichen identisch sind und bevorzugt für einen Draht von 1 bis 3 mm, bevorzugter 2 bis 3 mm, angepasst sind, und dass sich die Maße jeder ersten und zweiten Nut (101, 201; 201, 202) von den Maßen jeder dritten und vierten (105, 106; 203, 204) Nut unterscheiden; und/oder
dass das erste Klemmelement (100) an der zweiten Seite (100B) mit zumindest einer Aussparung (121) bereitgestellt wird und dass das zweite Klemmelement (200) an der zweiten Seite (200B) mit zumindest einem Protrusion (221) mit einer Form, die zu derjenigen der Aussparung (121) komplementär ist, bereitgestellt wird, dies so, dass das erste Klemmelement (100) nicht drehbar an dem zweiten Klemmelement (200) angebracht ist, wenn der dritte und vierte Draht (115, 116) zwischen die zweiten Seiten (100B, 200B) des ersten und zweiten Klemmelements (100, 200) geklemmt sind; und/oder
dass sich die zumindest eine dritte und vierte Nut (105, 106) des ersten Klemmelements (100) in eine erste Richtung erstrecken, und dass zumindest eine weitere dritte Nut und zumindest eine weitere vierte Nut weiter in einer zweiten Richtung an der ersten Seite (100A) des ersten Klemmelements (100) bereitgestellt werden, wobei die erste Richtung an einem Winkel zu der zweiten Richtung ist.

10. Befestigungsanordnung nach einem der vorhergehenden Ansprüche, **dadurch gekennzeichnet, dass** die Befestigungsanordnung weiter eine Schraube (300) umfasst und dass das erste Klemmelement (100) zur Anbringung eines Gehäuses eines elektrischen Gerätes daran unter Verwendung der Schraube (300) angepasst ist; dass das erste Klemmelement (100) mit einer Aussparung (121) und das zweite Klemmelement (200) mit einem Protrusion (221) bereitgestellt wird, oder umgekehrt; und dass die Aussparung (121) und der komplementäre Protrusion (221) zur Aufnahme der Schraube (300) darin angepasst sind.

11. Erstes Befestigungselement (100) zur Verwendung in einer Befestigungsanordnung nach einem der vorhergehenden Ansprüche; **dadurch gekennzeichnet, dass** die zumindest eine erste Nut (102) und/oder die zumindest eine zweite Nut (202) des ersten Klemmelements (100) in jedem Fall zumindest zwei benachbarte erste und/oder zweite Nuten (102, 202) umfasst.

12. Zweites Befestigungselement (200) zur Verwendung in einer Anordnung nach einem der Ansprüche 1-10; **dadurch gekennzeichnet, dass** die zumindest eine erste Nut (102) und/oder die zumindest eine zweite Nut (202) des zweiten Klemmelements (200) in jedem Fall zumindest zwei benachbarte erste und/oder zweite Nuten (102, 202) umfasst.

13. Verfahren zur Anbringung einer Befestigungsanordnung nach einem der Ansprüche 1-10 mit einem ersten und zweiten Klemmelement (100, 200) an einem Plattenverschluss mit einem ersten und einem zweiten Draht (111, 112), die folgenden Schritte umfassend:
- das erste Klemmelement (100) ist mit einer ersten Seite (100A) gegen eine erste Seite (200A) des zweiten Klemmelements (200) platziert;
- das erste Klemmelement (100) ist mittels eines Verbindungsmittels (300) mit dem zweiten Klemmelement (200) verbunden;
- der erste und der zweite Draht (111, 112) werden zwischen dem verbundenen ersten und dem zweiten Klemmelement (100, 200) getragen;
- das Verbindungsmittel (300) ist zum Zwecke des Klemmens des ersten und zweiten Drahtes (111, 112) zwischen das erste und das zweite Klemmelement (100, 200) gespannt.

## Revendications

1. Assemblée de fixage comprenant un premier élément de serrage, un deuxième élément de serrage et un moyen de connection pour connecter les premier et deuxième éléments de serrage (100, 200), dans lequel les premier et deuxième éléments de serrage sont adaptés pour être fixés sur au moins deux fils (111, 112), et en particulier pour être fixables sur différents types de fils; dans lequel le premier élément de serrage (100) est fourni d'un premier côté (100A) avec au moins une première rainure (101) et au moins une deuxième rainure (102); et le deuxième élément de serrage (200) est fourni d'un premier côté (200A) avec au moins une première rainure (201) et au moins une deuxième rainure (202);
dans lequel chaque première rainure (101) du premier élément de serrage (100) est adaptée pour coopérer avec une première rainure (201) du deuxième élément de serrage (200) dans le but de recevoir un premier fil (111) entre ceux-ci, et chaque deuxième rainure (102) du premier élément de serrage (100) est adaptée pour coopérer avec une deuxième rainure (202) du deuxième élément de serrage (200) dans le but de recevoir un deuxième fil (112) entre ceux-ci ;
ceci tel que le premier et le deuxième fil (111, 112) peut être portés entre les premiers côtés (100A, 200A) du premier et du deuxième élément de serrage (100, 200), et le premier et le deuxième élément de serrage (100, 200) puissent être fixés sur le premier et le deuxième fil (111, 112) par le moyen de connection (300) ;
**caractérisé en ce que** l'au moins une première rainure (102) et/ou l'au moins une deuxième rainure (202) du premier et deuxième élément de serrage (100, 200) comprend dans chaque cas au moins deux premières et/ou deuxièmes rainures adjacentes (102, 202).

2. Assemblée de fixage selon la revendication 1, **caractérisé en ce que** le premier élément de serrage (100) est fourni du premier côté (100A) avec au moins un renfoncement (121) et **en ce que** le deuxième élément de serrage (200) est fourni du premier côté (200A) avec au moins une protrusion (221) de forme complémentaire à celle du renfoncement (121), ceci tel que le premier élément de serrage (100) est monté de façon non-rotative contre le deuxième élément de serrage (200) quand les premier et deuxième fils (111, 112) sont serrés entre les premiers côtés (100A, 200A) des premier et deuxième éléments de serrage (100, 200).

3. Assemblée de fixage selon l'une quelconque des revendications 1-2, **caractérisé en ce que** l'au moins une première et/ou deuxième rainure (102, 202) des premier et deuxième éléments (100, 200) sont situées de chaque côté de moyen de connection (300).

4. Assemblée de fixage selon l'une quelconque des revendications 1-3, **caractérisé en ce que** le moyen de connection (300) s'étend entre substantiellement le centre du premier élément de serrage (100) et substantiellement le centre du deuxième élément de serrage (200).

5. Assemblée de fixage selon l'une quelconque des revendications 1-4, **caractérisé en ce que** l'au moins une première rainure (101, 201) de respectivement le premier et le deuxième élément (100, 200) est substantiellement parallèle à l'au moins une deuxième rainure (102, 202) de respectivement le premier et le deuxième élément de serrage (100, 200) ; et/ou l'au moins une première et deuxième rainure (101, 201) du premier élément de serrage (100) s'étendent dans une première direction, et l'au moins une autre première rainure et l'au moins une autre deuxième rainure sont fournies dans une deuxième direction du premier côté (100A) du premier élément de serrage (100), où la première direction est à un angle par rapport à la deuxième direction.

6. Assemblée de fixage selon l'une quelconque des revendications précédentes, **caractérisé en ce que** le moyen de connection (300) est une vis.

7. Assemblée de fixage selon l'une quelconque des revendications précédentes, **caractérisé en ce que** le premier et le deuxième élément de serrage (100, 200) sont substantiellement en forme de plaques.

8. Assemblée de fixage selon l'une quelconque des revendications précédentes, **caractérisé en ce que** le premier élément de serrage (100) est fourni d'un deuxième côté (100B) avec au moins une troisième rainure (105) et au moins une quatrième rainure (106); et le deuxième élément de serrage (200) est fourni d'un deuxième côté (200B) avec au moins une troisième rainure (203) et au moins une quatrième rainure (204), dans lequel chaque troisième rainure (105) du premier élément de serrage (100) est adaptée pour coopérer avec une troisième rainure (203) du deuxième élément de serrage (200) dans le but de recevoir une troisième fil (115) entre ceux-ci, et chaque quatrième rainure (106) du premier élément de serrage est adaptée pour coopérer avec la quatrième rainure (204) du deuxième élément de serrage (200) dans le but de recevoir une quatrième fil (116) entre ceux-ci;
ceci tel que le troisième et le quatrième fil (115, 116) peut être portés entre les deuxièmes côtés (100B, 200B) du premier et du deuxième élément de serrage (100, 200) et que le premier et le deuxième élément de serrage (100, 200) peut être fixés sur les troisième et quatrièmes fils (115, 116) par le moyen de connection (300).

9. Assemblée de fixage selon la revendication 9, **caractérisé en ce que** l'au moins une troisième rainure (105, 203) des premier et deuxième éléments de serrage (100, 200) comprend dans chaque cas au moins deux troisièmes rainures adjacentes ; et/ou
**en ce que** l'au moins une quatrième rainure (106, 204) des premier et deuxième éléments de serrage (100, 200) comprend dans chaque cas au moins deux quatrièmes rainures adjacentes ; et/ou en ce que l'au moins une troisième rainure (105, 203) des premier et deuxième éléments de serrage (100, 200) est substantiellement parallèle à l'au moins une quatrième rainure (106, 204) des respectivement premier et deuxième éléments de serrage (100, 200); et/ou
**en ce que** les dimensions de chaque première et deuxième rainure (101, 102) sont substantiellement identiques et sont préférentiellement adaptées pour un fil d'un diamètre de 3 à 7 mm, **en ce que** les dimensions de chaque troisième et quatrième rainure (105, 106 ; 203, 104) sont substantiellement identiques et sont préférentiellement adaptée pour un fil d'un diamètre de 1 à 3 mm, plus préférentiellement de 2 à 3 mm, et que les dimensions de chaque première et deuxième rainure (101, 201 ; 201, 202) sont différentes des dimensions de chaque troisième et quatrième rainure (105, 106 ; 203, 104) ; et/ou
**en ce que** le premier élément de serrage (100) est fourni du deuxième côté (100B) avec au moins un renfoncement (121) et **en ce que** le deuxième élément de serrage (200) est fourni du deuxième côté (200B) avec au moins une protrusion (221) de forme complémentaire à celle du renfoncement (121), ceci tel que le premier élément de serrage (100) est monté de façon non-rotative contre le deuxième élément de serrage (200) quand les troisième et quatrième fils (115, 116) sont serrés entre les deuxièmes côtés (100B, 200B) des premier et deuxième éléments de serrage (100, 200) ;
et/ou
**en ce que** l'au moins une troisième et quatrième rainure (105, 106) du premier élément de serrage (100) s'étendent dans une première direction, et **en ce que** au moins une autre troisième rainure et au moins une autre quatrième rainure sont fournies dans une deuxième direction du premier côté (100A) du premier élément de serrage (100), où la première direction est à un angle par rapport à la deuxième direction.

10. Assemblée de fixage selon l'une quelconque des revendications précédentes, **caractérisé en ce que** l'assemblée de fixage comprend en outre une vis (300) et que le premier élément de serrage (100) est adapté pour le montage d'un boîtier d'un appareil électrique contre celui-ci en utilisant la vis (300); **en ce que** le premier élément de serrage (100) est fourni avec un renfoncement (121) et le deuxième élément de serrage (200) est fourni avec une protrusion (221) ou vice versa; et **en ce que** le renfoncement (121) et la protrusion complémentaire (221) sont adaptés pour recevoir la vis à l'intérieur.

11. Premier élément de serrage (100) pour utilisation dans un assemblée de fixage selon l'une quelconque des revendications précédentes, **caractérisé en ce que** l'au moins une première rainure (102) et/ou l'au moins une deuxième rainure (202) du premier élément de serrage (100) comprend dans chaque cas au moins deux première et/ou deuxième rainures adjacentes (102, 202).

12. Deuxième élément de serrage (200) pour utilisation dans un assemblée de fixage selon l'une quelconque des revendications 1-10, **caractérisé en ce que** l'au moins une première rainure (102) et/ou l'au moins une deuxième rainure (202) du deuxième élément de serrage (200) comprend dans chaque cas au moins deux première et/ou deuxième rainures adjacentes (102, 202).

13. Procédé de montage d'une assemblée de fixage selon l'une quelconque des revendications 1-10, avec un premier et un deuxième élément de serrage (100, 200) contre une fermeture du panneau avec un premier et un deuxième fil (111, 112), comprenant les étapes suivantes :
- le premier élément de serrage (100) est placé avec un premier côté (100A) contre un premier côté (200A) du deuxième élément de serrage (200) ;
- le premier élément de serrage (100) est connecté au deuxième élément de serrage (200) par a moyen de connection (300) ;
- les premier et deuxième fils (111, 112) sont portés entre le premier et le deuxième élément de serrage (100, 200) ;
- le moyen de connection (300) est tendu dans le but de serrer les premier et deuxième fils (111, 112) entre le premier et le deuxième élément de serrage (100, 200).
